# EUROPEAN PATENT SPECIFICATION

(11) **EP 2 555 364 B1**
(45) Date of publication and mention of the grant of the patent: **06.04.2016**
(21) Application number: 11762332.2
(22) Date of filing: 31.01.2011
(51) Int. Cl.: H02G 3/22, B60R 16/02, H01B 17/58

(54) **GROMMET**
ÖSE
PASSE-FIL

(30) Priority: 29.03.2010 JP 2010076209
(43) Date of publication of application: 06.02.2013
(73) Proprietor: Sumitomo Wiring Systems, Ltd., Yokkaichi-shi, Mie 510-8503 (JP); Suzuki Motor Corporation, Hamamatsu, Shizuoka 432-8611 (JP)
(72) Inventor: SUEHIRO, Shinichi, Yokkaichi-shi Mie 510-8503 (JP); KURODA, Masaki, Yokkaichi-shi Mie 510-8503 (JP); TANAHASHI, Hisayuki, Hamamatsu-shi Shizuoka 432-8611 (JP); YAMAMOTO, Hiroya, Hamamatsu-shi Shizuoka 432-8611 (JP)
(74) Representative: Müller-Boré & Partner Patentanwälte PartG mbB
(86) International application number: PCT/JP2011/051871
(87) International publication number: WO 2011/122091

(56) References cited:
- JP-A- 6 165 340
- JP-A- 2009 269 566

## Description

### TECHNICAL FIELD

The present invention relates to a grommet that is externally fitted onto a wire harness arranged in a vehicle to be mounted in a through-hole of a vehicle-body panel, and more particularly, to a grommet that is externally fitted onto a wire harness extending between a door and a vehicle-body panel to be capable of preventing buckling which may be caused by torsional force applied to the grommet when the door is opened/closed.

### BACKGROUND ART

Conventionally, the assignee of the present application has provided plural door grommets of this kind, which are externally fitted onto a wire harness arranged between a door and a vehicle-body panel.

For example, a grommet disclosed in Japanese Patent Application Laid-Open No. 2002-374612 (Patent Document 1) is formed in a configuration illustrated in Fig. 11. The grommet 100 is bent and placed between a vehicle-body panel and a door panel, a large-diameter cylindrical section 102 is provided at each end of a pleated cylindrical section 101, an inner resin member 103 is internally fitted into the large-diameter cylindrical section 102, and an engagement pawl is provided on the inner resin member 103 to be engaged with the peripheral edge of a through-hole of the vehicle-body panel.

In the grommet, since bending stresses are concentrated to a boundary between the large-diameter cylindrical section 102 and the pleated cylindrical section 101 when the door is opened/closed, axial reinforcement ribs 110 are provided on the longitudinal opposite end portions of the pleated cylindrical section 101, which fill up valley portions over a plurality of the valley portions and peak portions to thicken the opposite end portions. The opposite end portions of the pleated cylindrical section 101 are reinforced by the reinforcement ribs 110 to be hardly bent, thereby reducing the concentration of the bending stresses and preventing the occurrence of breaking of an electric wire inserted therein.

In the grommet in Patent Document 1, it is possible to reinforce the longitudinal opposite end portions of the pleated cylindrical section, but impossible to reinforce the sections 120 between the pleated cylindrical section and the large-diameter cylindrical sections.

The grommet in Patent Document 1 is a two-piece type in which an inner resin member is internally fitted into the large-diameter cylindrical section 102. However, any of the grommets which are conventionally provided and disclosed in Japanese Patent Laid-Open Publication Nos. 2003-87945, 2000-217229 and the like, including a one-piece type grommet which is provided with an annular vehicle-body engagement recess on the circumference surface of the large-diameter cylindrical section of the grommet, are not reinforced in an area between a pleated cylindrical section and a large-diameter cylindrical section that is provided with the annular vehicle-body engagement recess.

When the pleated cylindrical section receives a load in a torsional direction to be torsionally rotated, a portion of the large-diameter cylindrical section engaged in the through-hole of the vehicle-body panel is fixed not to be rotated. Therefore, the area between the large-diameter cylindrical section and the end of the pleated cylindrical section is prone to receive a torsional load. Specifically, in a case where the area between the pleated cylindrical section and the large-diameter cylindrical section of the grommet is bent due to an installation condition of the grommet on the vehicle-body, there are problems in that, when the torsional action is applied to the area, the bent area may be broken or sunken by buckling, the appearance of the grommet may be easily degraded, and a wire passing through the grommet may be readily damaged.
The document JP2009269566 discloses a grommet according to the preamble of claim 1.

### PRIOR ART DOCUMENTS

### PATENT DOCUMENTS

Patent Document 1: JP-A-2002-374612

### SUMMARY OF THE INVENTION

### PROBLEMS TO BE SOLVED BY THE INVENTION

The present invention has been made in an effort to solve the problems described above, and an object of the present invention is to reinforce an area between an end of a pleated cylindrical section and a large-diameter cylindrical section fastened to a through-hole of a vehicle-body panel to increase a buckling resistance.

### MEANS FOR SOLVING THE PROBLEMS

In order to solve the problems described above, the present invention provides a grommet, according to claim 1.

Further, the grommet is provided with a plurality of middle-ring parts.

### EFFECTS OF THE INVENTION

Torsional force may be applied to a curved cylindrical section placed between a pleated cylindrical section, to which rotational force is applied when an opening and closing body such as, for example, a door is opened/closed, and a large-diameter cylindrical section fastened to a through-hole of a vehicle-body panel as described above. However, since reinforcement ribs are provided in the curved cylindrical section, buckling by torsion can be effectively prevented.

### BRIEF DESCRIPTION OF THE DRAWINGS

Fig. 1A is a perspective view of a grommet according to a referential exemplary embodiment of the present invention, and Fig. 1B is an enlarged cross-sectional view of a primary part thereof.
Fig. 2 is an explanatory view illustrating a mounting state of the grommet for a vehicle.
Fig. 3 is a perspective view of a grommet according to a first exemplary embodiment.
Fig. 4A is an enlarged perspective view of a primary part of the grommet according to the first exemplary embodiment, and Fig. 4B is an enlarged cross-sectional view of the primary part.
Fig. 5 illustrates a grommet according to a second exemplary embodiment, in which Fig. 5A is an enlarged perspective view of a primary part of the grommet, and Fig. 5B is an enlarged cross-sectional view of the primary part.
Fig. 6 illustrates a first modified example of the second exemplary embodiment, in which Fig. 6A is an enlarged cross-sectional view of a primary part thereof, and Fig. 6B is a front view of the primary part.
Fig. 7 illustrates a second modified example of the second exemplary embodiment, in which Fig. 7A is an enlarged cross-sectional view of a primary part of the second modified example, and Fig. 7B is a front view of the primary part.
Figs. 8A, 8B and 8C are front views illustrating primary parts of a second modified example of the third exemplary embodiment.
Figs. 9A and 9B are cross-sectional views illustrating a third exemplary embodiment.
Fig. 10 is a cross-sectional view illustrating a primary part of a fourth exemplary embodiment.

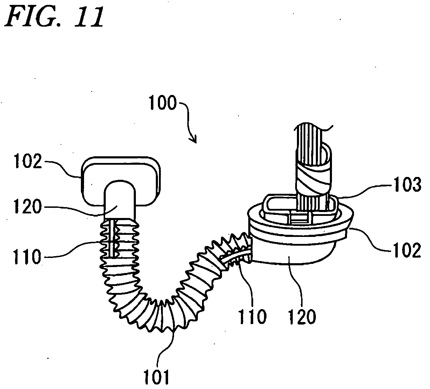

Fig. 11 is a view illustrating a conventional embodiment.

### MODES FOR CARRYING OUT THE INVENTION

Hereinafter, exemplary embodiments of a grommet according to the present invention will be described with reference to the drawings.

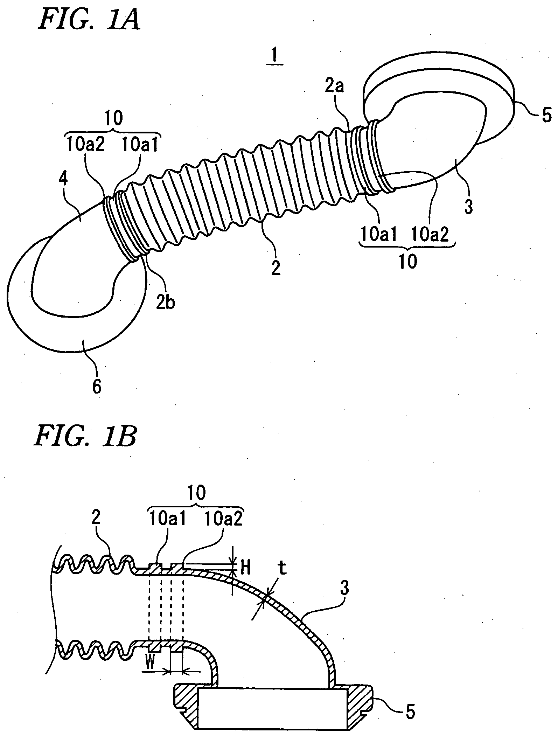

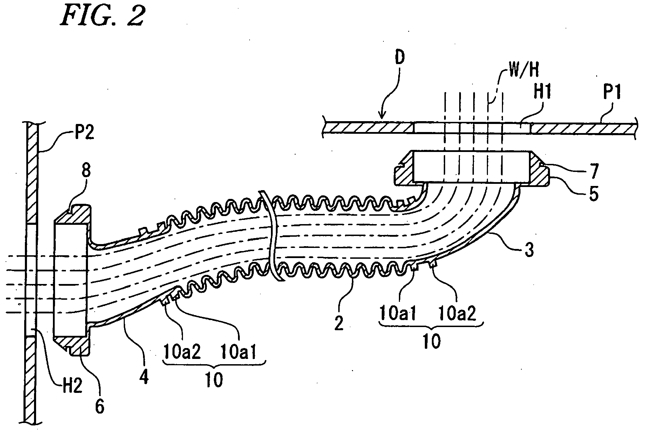

Figs. 1A, 1B and 2 illustrate a grommet 1 of a referential exemplary embodiment.

The grommet 1 is to be externally fitted onto a wire harness arranged between a back door and a vehicle-body frame of a vehicle. The grommet 1 is a one-piece type grommet formed of rubber or elastomer.

The grommet 1 is provided with a pleated cylindrical section 2, a pair of curved cylindrical sections 3, 4 extending from the longitudinal opposite ends of the pleated cylindrical section 2, and a pair of large-diameter cylindrical sections 5, 6 extending from tip end sides of the both curved cylindrical sections 3, 4, by one-piece molding. The outer circumference surfaces of the large-diameter cylindrical sections 5, 6 are provided with annular vehicle-body engagement recesses 7, 8.

As illustrated in Fig. 2, since one of the large-diameter cylindrical sections 5 is fixed to a through-hole H1 provided in an upper frame panel P1 of a back door D from the below side, the large-diameter cylindrical section 5 is oriented substantially upwardly, and the vehicle-body engagement recess 7 provided on the large-diameter cylindrical section 5 is configured to be fixedly engaged with the peripheral edge of the through-hole H1 provided on the bottom side of the upper frame panel P1.

Since the other large-diameter cylindrical section 6 is fixed to a through-hole H2 provided in a side panel P2 of the vehicle-body which surrounds an opening for the back door from the lateral side, the large-diameter cylindrical section 6 is oriented substantially laterally, and the vehicle-body engagement recess 8 provided on the large-diameter cylindrical section 6 is configured to be fixedly engaged with the peripheral edge of the through-hole H2 provided on the lateral side of the side panel P2.

As described above, since the axial directions of the opposite large-diameter cylindrical sections 5, 6, between which the pleated cylindrical section 2 is interposed, are different from each other, the cylindrical section between the large-diameter cylindrical section 5 and one of the longitudinal ends 2a of the pleated cylindrical section 2 is formed as the curved cylindrical section 3 which is curved upwardly, and the cylindrical section between the large-diameter cylindrical section 6 and the other longitudinal end 2b of the pleated cylindrical section 2 is formed as the curved cylindrical section 4, which is curved laterally.

Reinforcement ribs 10 are provided on the outer circumference surfaces of the curved cylindrical sections 3, 4 to be protruding therefrom, by one-piece molding.

The reinforcement ribs 10 include a ring part 10a1 provided at each boundary location between the longitudinal ends of the curved cylindrical sections 3, 4 and the pleated cylindrical section 2, and a ring part 10a2 provided at a location near but spaced from the ring part 10a1.

Each of the ring parts 10a1, 10a2 is formed in an annular shape, of which the diameter is perpendicular to the axial direction of the curved cylindrical section, and is seamlessly continued in the circumferential direction. The sizes of the reinforcement ribs formed by the ring parts 10a1, 10a2 are, for example, in the range of 2 mm to 3 mm in protruding height H and in the range of 3 mm to 4 mm in width W. The inner diameter of the curved cylindrical sections 3, 4 is in the range of 15 mm to 25 mm, and the thickness thereof is in the range of 1.5 mm to 3 mm.

The grommet 1 is externally fitted onto a vehicle-body connecting side of the wire harness W/H arranged to the back door D, and as described above, the vehicle-body engagement recess 7 of the large-diameter cylindrical section 5 is fixedly engaged with the peripheral edge of the through-hole H1 of the upper frame panel P1 of the back door D. The vehicle-body engagement recess 8 of the other large-diameter cylindrical section 6 is fixedly engaged with the peripheral edge of the through-hole H2 of the side panel P2 of the vehicle-body. The pleated cylindrical section 2 of the grommet 1 extends between the back door D and the vehicle-body.

The pleated cylindrical section 2 of the grommet 1 is bent when the back door D is closed. When the back door D is opened, the pleated cylindrical section 2 is extended and at the same time, receives torsional force due to the rotation of the back door D. At this time, the vehicle-body engagement recesses 7, 8 of the both large-diameter cylindrical sections 5, 6 of the grommet 1 are fixedly engaged with the peripheral edges of the through-holes H1, H2 of the panels P1, P2, respectively. Thus, a load is applied to the curved cylindrical sections 3, 4 between the pleated cylindrical section 2 and the large-diameter cylindrical sections 5, 6.

Since each of the outer circumference surfaces of the curved cylindrical sections 3, 4, to which a torsional load is applied is provided with the reinforcement ribs 10 including the opposite end-ring parts 10a1, 10a2 as to be reinforced strongly, it is possible to prevent the curved cylindrical sections 3, 4 from being bent or sunken by buckling due to the torsional load.

That is, since the reinforcement ribs 10 include the ring parts 10a1, 10a2 in the boundary locations between the pleated cylindrical section 2 and the curved cylindrical sections 3, 4, concentrated stresses, which are apt to be applied to the boundary locations, can be distributed in the circumferential direction. As such, since the boundary portions between the curved cylindrical sections 3, 4 and the pleated cylindrical section 2 are reinforced, the buckling resistance of the curved cylindrical sections at the boundary portions can be increased to prevent the occurrence of buckling reliably.

Further, since the reinforcement ribs 10 are provided on the outer circumference surfaces of the curved cylindrical sections 3, 4, it is easy to mold the reinforcement ribs 10 and to design the shape of the reinforcement ribs 10. Furthermore, it is easy to insert a wire harness into the grommet.

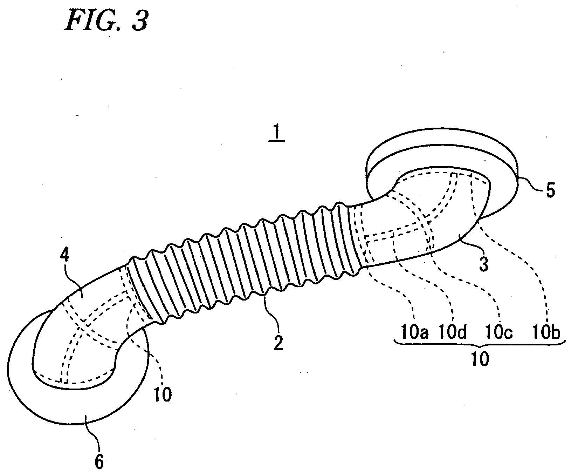

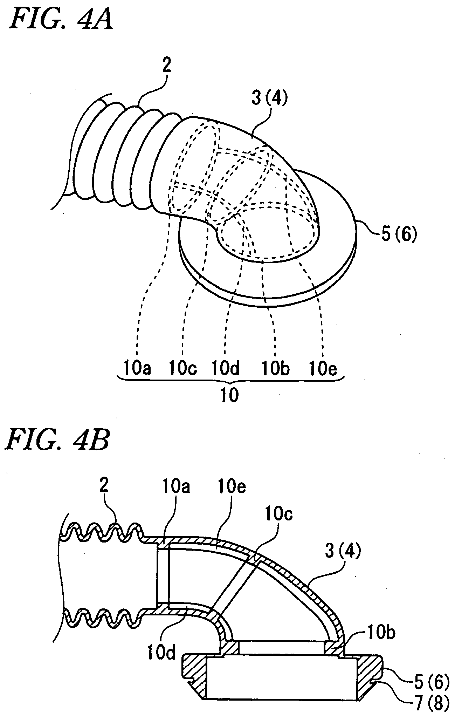

Figs. 3, 4A and 4B illustrate a first exemplary embodiment. In the first exemplary embodiment, the reinforcement ribs 10 are provided on the inner circumference surfaces of the curved cylindrical sections 3, 4 of the grommet 1, by one-piece molding, and locations provided with the reinforcement ribs 10 are increased.

Each of the reinforcement ribs 10 includes opposite end-rings parts 10a, 10b which are provided at the boundary location between the pleated cylindrical section 2 and one of longitudinal ends of each of the curved cylindrical sections 3, 4 and at the boundary location between the large-diameter cylindrical sections 5, 6 and the other longitudinal end of each of the curved cylindrical sections 3, 4, respectively, one middle-ring part 10c provided at the middle area of each of the curved cylindrical sections 3, 4, and connection parts 10d, 10e which are provided between the opposite end-ring parts 10a, 10b and the middle-ring part 10c and face the opposite end-ring parts 10a, 10b and the middle-ring part 10c. The connection parts 10d, 10e interconnect the opposite end-ring parts 10a, 10b and the middle-ring part 10c along the curved axial direction of the curved cylindrical sections 3, 4.

Each of the opposite end-ring parts 10a, 10b, and the middle-ring part 10c is formed in an annular shape, of which the diameter is perpendicular to the axial direction, and seamlessly continued in the circumferential direction thereof. The protruding height, width and thickness of the reinforcement ribs, including the opposite end-ring parts 10a, 10b, the middle-ring part 10c, as well as connection parts 10d, 10e, are the same as those in the referential exemplary embodiment.

The grommet 1 of the first exemplary embodiment is also externally fitted onto the vehicle-body connecting side of the wire harness W/H arranged to the back door D, and the wire harness extends between the back door D and the vehicle-body, as in Fig. 2 of the referential exemplary embodiment. Therefore, a torsional load is applied to the curved cylindrical sections 3, 4 between the pleated cylindrical section 2 and the large-diameter cylindrical sections 5, 6 as the back door D is opened/closed.

Since each of the inner circumference surfaces of the curved cylindrical sections 3, 4 to which a torsional load is applied, is provided with five reinforcement ribs 10 in total such as, for example, the opposite end-ring parts 10a, 10b, the middle-ring part 10c, and the connection parts 10d, 10e to reinforce the curved cylindrical sections 3, 4 strongly, it is possible to prevent the curved cylindrical sections 3, 4 from being bent or sunken by buckling due to the torsional load.

Specifically, since each of the reinforcement ribs 10 includes the ring part 10a provided at the boundary location between each of the curved cylindrical sections 3, 4 and the pleated cylindrical section 2 and the ring part 10b provided at the boundary location between each of the large-diameter cylindrical sections 5, 6 and each of the curved cylindrical sections 3, 4, the concentrated stresses which are apt to be applied to the boundary locations can be distributed in the circumferential direction. Stresses are apt to be intensively applied substantially to the curved peak location at the longitudinal central location of the curved cylindrical sections 3, 4. However, since the middle-ring part 10c is provided at this location, the stresses can be distributed from the corresponding middle-ring part 10c in the circumferential direction.

In addition, since the opposite end-ring parts 10a, 10b and the middle-ring part 10c are connected at the connection parts 10d, 10e in the axial direction, the axial direction can alsobe reinforced.

Since the curved cylindrical sections 3, 4 are reinforced by the five ribs 10a to 10e in the circumferential direction and axial direction like this, the buckling resistance of the curved cylindrical sections 3, 4 can be increased to prevent the occurrence of buckling reliably.

Since the reinforcement ribs 10 are provided on the inner circumference surfaces of the curved cylindrical sections 3, 4, the appearance is good. In addition, since no step part is formed on the outer circumference surfaces by the reinforcement ribs 10, it is possible to prevent foreign matter such as dust frombeing attached. Furthermore, since the reinforcement ribs 10 do not protrude from the outer circumference surfaces, it is possible to secure a clearance in relation to the vehicle-body side so that the operation of the grommet is not disturbed.

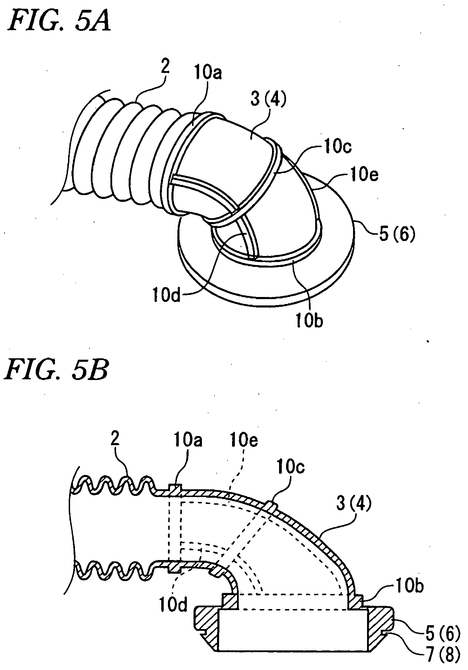

Figs. 5A and 5B illustrate a grommet according to a second exemplary embodiment.

The grommet 1 is the same as that in the first exemplary embodiment and different from that in the first exemplary embodiment in that the reinforcement ribs 10 provided in the curved cylindrical sections 3, 4 are provided on the outer circumference surfaces. Although the reinforcement ribs 10 are provided on the outer circumference surfaces, they are the same as those in the first exemplary embodiment in that the reinforcement ribs 10 are constituted by opposite end-ring parts 10a, 10b, a middle-ring part 10c, and connection parts 10d, 10e.

Even if the reinforcement ribs 10 are provided on the outer circumference surfaces of the curved cylindrical sections 3, 4, like this, it is also possible to increase buckling resistance. When the reinforcement ribs 10 are provided on the outer circumference surfaces, it is easy to form the reinforcement ribs 10 and to design the shape of the reinforcement ribs 10, as compared with a case where the reinforcement ribs 10 are provided in the inner circumference surfaces.

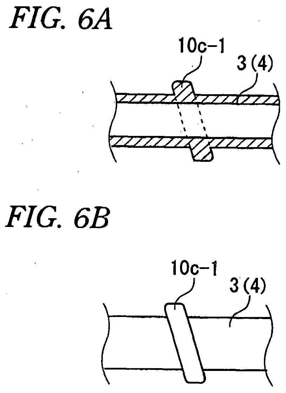

Figs. 6A and 6B illustrate a first modified example of the second exemplary embodiment.

In the first modified example, a middle-ring part 10c-1 has an oval ring shape, of which the diameter is inclined in relation to the axial direction. With the oval ring-shaped middle-ring part 10c-1, it is possible to reinforce a long distance in the axial direction, as compared with an annular middle-ring part.

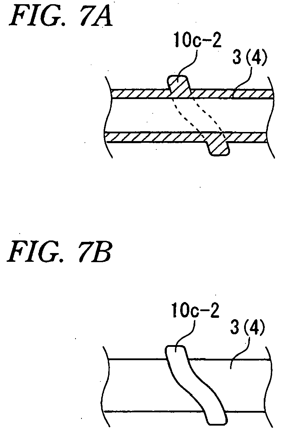

Figs. 7A and 7B illustrate a second modified example of the second exemplary embodiment.

In the second modified example, a middle-ring part 10c-2 has a serpentine annular rib which is formed around the circumference in a ring shape to be serpentine in the axial direction. With the serpentine middle-ring part 10c-2, it is also possible to reinforce a long distance in the axial direction, as compared with the annular middle-ring part.

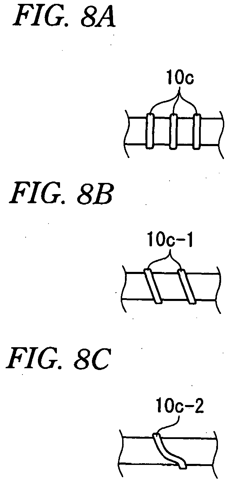

Although one middle-ring part 10c may be provided, plural middle-ring parts may be provided as in the third modified example illustrated in Figs. 8A to 8C.

When the same longitudinal interval is to be reinforced by the middle-ring parts, three ribs may be sufficient with the annular ribs 10c illustrated in Fig. 8A, two ribs may be sufficient with the oval ring shape ribs 10c-1 illustrated in Fig. 8B, and one rib may be sufficient with the serpentine rib 10c-2 illustrated in Fig. 8C.

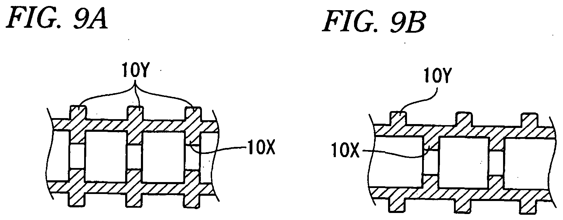

Figs. 9A and 9B illustrate a third exemplary embodiment.

In the third exemplary embodiment, reinforcement ribs 10X, 10Y are provided on both of the inner and outer circumference surfaces of the curved cylindrical sections 3, 4. The reinforcement ribs 10X on the inner circumference surface include opposite end-ring parts, a middle-ring part and a connection part as in the second exemplary embodiment, but three middle-ring parts 10c are provided. The reinforcement ribs 10Y on the outer circumference surface include opposite end-ring parts, a middle-ring part and a connection part as in the second exemplary embodiment, but three middle-ring parts 10c are provided.

In the exemplary embodiment in Fig. 9A, the locations of the middle-ring parts 10c of the inner circumference side may be the same as those of the outer circumference side, but in the exemplary embodiment in Fig. 9B, the locations of the middle-ring parts 10c of the inner circumference side may be offset from those of the outer circumference side.

As described above, when the reinforcement ribs 10 are provided on both of the inner and outer circumference surfaces of the curved cylindrical sections 3, 4, the reinforcement effect can be further increased.

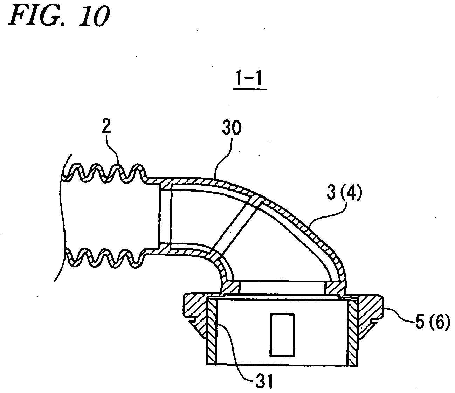

Fig. 10 illustrates a fourth exemplary embodiment.

A grommet 1-1 in the fifth exemplary embodiment is a two-piece type grommet in which an inner resin member 31 is combined into a grommet body 30 formed of rubber or elastomer, the curved cylindrical sections 3, 4 of the grommet body 30 are provided with reinforcement ribs 10 which are the same as those in the second exemplary embodiment.

Since other constructions and acting effects are the same as those in the second exemplary embodiment, the same reference numerals are used and the description thereof will be omitted.

### DESCRIPTION OF REFERENCE NUMERALS AND SIGNS

- 1: Grommet
- 2: Pleated cylindrical section
- 3, 4: Curved cylindrical sections
- 5, 6: Large-diameter cylindrical sections
- 7, 8: Vehicle-body engagement recess
- 10: Reinforcement ribs
- 10a1, 10a2, 10b: Ring parts
- 10c: Middle-ring part
- 10d, 10e: Connection parts

## Claims

1. A grommet formed of rubber or elastomer and externally fittable onto a wire harness extending between a vehicle-body panel and an opening and closing body comprised of a door or a trunk lid of a vehicle, the grommet comprising:
a pleated cylindrical section (2);
a curved cylindrical section (3, 4) extending from an end of the pleated cylindrical section (2); and
a cylindrical section (5, 6) arranged at a tip end of the curved cylindrical section (3, 4), wherein:
a vehicle-body engagement recess (7, 8) is formed on the outer circumference surface of the cylindrical section (5, 6), or an inner resin member (31) formed with vehicle-body engagement pawls is internally fitted into the cylindrical section (5, 6); and
at least one of the outer circumference surface and the inner circumference surface of the curved cylindrical section (3, 4) is provided with reinforcement ribs (10) for resisting buckling; and **characterized in that**
the reinforcement ribs (10) include: opposite end-ring parts (10a, 10b) provided at a boundary between one of the longitudinal ends of the curved cylindrical section (3, 4) and the pleated cylindrical section (2) and at a boundary between the other of the longitudinal ends of the curved cylindrical section (3, 4) and the cylindrical section (5, 6), respectively; a middle-ring part (10c) provided at a middle area of the curved cylindrical section (3, 4); and
a connection part (10d, 10e) configured to interconnect the opposite end-ring parts (10a, 10b) and the middle-ring part (10c) in the axial direction.

2. The grommet of claim 1, wherein a plurality of middle-ring parts (10c) is provided.

## Patentansprüche

1. Eine Durchführung bzw. Öse, die aus Gummi oder Elastomer gebildet wird, und die von außen an einem Kabelbaum anbringbar ist, der sich von einem Kraftfahrzeugkarosserieplatte bzw. -Verkleidung und einem sich öffnenden und schließenden Körper erstreckt, der aus einer Tür oder einer Heckklappe eines Fahrzeugs besteht, wobei die Durchführung Folgendes umfasst:
einen plissierten zylindrischen Abschnitt (2);
einen gekrümmten zylindrischen Abschnitt (3, 4), der von einem Ende des plissierten zylindrischen Abschnitts (2) ausgeht; und
einen zylindrischen Abschnitt (5, 6), der am Spitzenende des gekrümmten zylindrischen Abschnitts (3, 4) angeordnet ist, wobei:
eine Fahrzeugkarosserie-Eingriffsausnehmung (7, 8) an der äußeren Umfangsfläche des zylindrischen Abschnitts (5, 6) gebildet wird oder wobei ein inneres Harzelement (31), das mit Fahrzeugkarosserie-Eingriffsklauen gebildet wird, innerhalb des zylindrischen Abschnitts (5, 6) eingepasst wird; und
mindestens eine unter der äußeren Umfangsfläche und der inneren Umfangsfläche des gekrümmten zylindrischen Abschnitts (3, 4) mit Verstärkungsrippen (10) ausgestattet wird, um einem Wegknicken entgegenzuwirken; und **dadurch gekennzeichnet, dass**
die Verstärkungsrippen (10) Folgendes beinhalten: entgegengesetzte Abschlussring-Teile (10a, 10b), die jeweils in einem Grenzbereich zwischen einem der longitudinalen Enden des gekrümmten zylindrischen Abschnitts (3, 4) und dem plissierten zylindrischen Abschnitt (2) bereitgestellt werden und in einem Grenzbereich zwischen dem anderen der longitudinalen Enden des gekrümmten zylindrischen Abschnitts (3, 4) und dem zylindrischen Abschnitt (5, 6); ein Mittelring-Teil (10c), das in einem mittleren Bereich des gekrümmten zylindrischen Abschnitts (3, 4) bereitgestellt wird; und
ein Verbindungsteil (10d, 10e), das konfiguriert ist, um die entgegengesetzten Abschlussring-Teile (10a, 10b) und das Mittelring-Teil (10c) in axialer Richtung miteinander zu verbinden.

2. Die Durchführung bzw. Öse nach Anspruch 1, wobei eine Vielzahl an Mittelring-Teile (10c) bereitgestellt werden.

## Revendications

1. Un passe-fil constitué de caoutchouc ou d'élastomère et qui peut être ajusté autour d'un faisceau de câbles s'étendant entre un panneau de carrosserie de véhicule et un corps d'ouverture et de fermeture constitué d'une porte ou d'un couvercle de coffre de véhicule, le passe-fil comprenant :
une section cylindrique plissée (2) ;
une section cylindrique courbée (3, 4) s'étendant à partir d'une extrémité de la section cylindrique plissée (2) ; et
une section cylindrique (5, 6) disposée à une extrémité de pointe ou encore à un embout de la section cylindrique courbée (3, 4), sachant que :
un renfoncement d'engagement sur carrosserie de véhicule (7, 8) est constitué à la surface de circonférence extérieure de la section cylindrique (5, 6) ou un élément en résine (31) formé avec des cliquets d'engagement sur carrosserie de véhicule est ajusté intérieurement dans une section cylindrique (5, 6) ; et
au moins une parmi la surface de circonférence extérieure et la surface de circonférence intérieure de la section cylindrique courbée (3, 4) est pourvue de nervures de renforcement (10) pour résister à un flambage ou encore faussage (*buckling*); et **caractérisé en ce que**
les nervures de renforcement (10) incluent : des pièces annulaires d'extrémité (10a, 10b) opposées fournies respectivement auprès d'une limite entre une parmi les extrémités longitudinales de la section cylindrique courbée (3, 4) et la section cylindrique plissée (2) et auprès d'une limite entre l'autre parmi les extrémités longitudinales de la section cylindrique courbée (3, 4) et la section cylindrique (5, 6) ; et une pièce annulaire centrale (10c) fournie dans une zone centrale de la section cylindrique courbée (3, 4) ; et
une pièce de connexion (10d, 10e) configurée pour interconnecter les pièces annulaires d'extrémité (10a, 10b) opposées et la pièce annulaire centrale (10c) en direction axiale.

2. Le passe-fil d'après la revendication 1, sachant qu'une pluralité de pièces annulaires centrales (10c) est fournie.
